# EUROPÄISCHE PATENTANMELDUNG

(11) **EP 4 696 545 A2**
(43) Veröffentlichungstag der Anmeldung: **18.02.2026**
(21) Anmeldenummer: 25187869.0
(22) Anmeldetag: 07.07.2025
(51) Int. Cl.: B60L 53/16, B60L 53/302, G01K 1/14, G01K 1/16

(54) **TEMPERATURSENSORBAUGRUPPE FÜR EINEN LADESTECKER UND LADESTECKER**

(30) Priorität: 23.07.2024 DE 102024120930
(71) Anmelder: BRUGG eConnect AG, 5200 Brugg AG (CH)
(72) Erfinder: Heckenberger, Bernd, 88477 Schönebürg (DE); Kabil, Karim, 10585 Berlin (DE); Speiser, Wolfgang, 89155 Erbach (DE); Zehnder, Dominik, 5212 Hausen (CH)
(74) Vertreter: Daub, Thomas

(57) **Zusammenfassung**

Die Erfindung geht aus von einer Temperatursensorbaugruppe (20) für einen Ladestecker (10), insbesondere einen Hochleistungs-Ladestecker zu einem Aufladen eines Elektrofahrzeugs, zumindest umfassend ein Temperatursensorelement (12) zu einer Erfassung von Temperaturmesssignalen, ein Wärmeaufnahmeelement (14), welches dazu eingerichtet ist, Wärme eines elektrischen Steckkontakts (16) des Ladesteckers (10) aufzunehmen, und ein Wärmeleitelement (18), welches dazu eingerichtet ist, die von dem Wärmeaufnahmeelement (14) aufgenommene Wärme zu dem Temperatursensorelement (12) zu leiten.

Es wird vorgeschlagen, dass zumindest das Wärmeaufnahmeelement (14) dazu eingerichtet ist, zumindest in einem in den Ladestecker (10) montierten Zustand der Temperatursensorbaugruppe (20) zumindest einen Teil eines über den Ladestecker (10) ausgebbaren Ladestroms zu leiten, insbesondere weiterzuleiten.

## Beschreibung

### Stand der Technik

Die Erfindung betrifft eine Temperatursensorbaugruppe nach dem Oberbegriff des Anspruchs 1 und einen Ladestecker nach dem Anspruch 13.

Es ist bereits vorgeschlagen worden, Temperaturen von Ladesteckern mittels Temperatursensoren zu überwachen. Häufig basieren diese auf indirekten Messungen und besitzen daher eine reduzierte Mess- und/oder Wiederholgenauigkeit oder sind, falls sie auf direkten Messungen basieren, derart fest in den Ladestecker integriert, dass ein Austausch bei Beschädigung oder Lebensdauerende nicht oder nur schwer möglich ist.

Die Aufgabe der Erfindung besteht insbesondere darin, eine gattungsgemäße Vorrichtung bereitzustellen, die die oben genannten Nachteile beseitigt. Die Aufgabe wird erfindungsgemäß durch die Merkmale der Patentansprüche 1 und 13 gelöst, während vorteilhafte Ausgestaltungen und Weiterbildungen der Erfindung den Unteransprüchen entnommen werden können.

### Vorteile der Erfindung

Die Erfindung geht aus von einer Temperatursensorbaugruppe für einen Ladestecker, insbesondere einen Hochleistungs-Ladestecker zu einem Aufladen eines Elektrofahrzeugs, zumindest umfassend ein Temperatursensorelement zu einer Erfassung von Temperaturmesssignalen, ein Wärmeaufnahmeelement, welches dazu eingerichtet ist, Wärme eines elektrischen Steckkontakts des Ladesteckers aufzunehmen, und ein Wärmeleitelement, welches dazu eingerichtet ist, die von dem Wärmeaufnahmeelement aufgenommene Wärme zu dem Temperatursensorelement zu leiten.

Es wird vorgeschlagen, dass zumindest das Wärmeaufnahmeelement dazu eingerichtet ist, zumindest in einem in den Ladestecker montierten Zustand der Temperatursensorbaugruppe zumindest einen Teil eines über den Ladestecker ausgebbaren Ladestroms zu leiten, insbesondere weiterzuleiten. Dadurch kann vorteilhaft eine besonders präzise Temperaturmessung, insbesondere mit einer besonders hohen Wiederholgenauigkeit, erreicht werden. Vorteilhaft kann eine zumindest nahezu direkte Temperaturmessung der stromführenden Komponenten des Ladesteckers ermöglicht werden.

Der Ladestecker ist insbesondere für eine Anwendung im E-Mobility-Bereich, vorzugsweise zu einer Herstellung einer Ladeverbindung mit einer Ladesäule, insbesondere Elektrofahrzeug-Ladesäule, und/oder für eine Herstellung einer Ladeverbindung mit einem Elektrofahrzeug vorgesehen. Der Ladestecker ist dabei vorzugsweise zu einem Einstecken in eine Buchse der Ladesäule und/oder in eine Buchse des Elektrofahrzeugs vorgesehen. Der Ladestecker ist insbesondere ein Hochleistungs-Ladestecker, insbesondere ein Gleichstrom-Hochleistungs-Ladestecker. Der Ladestecker, insbesondere der Hochleistungs-Ladestecker, ist vorzugsweise zumindest für die Übertragung von hohen Ladeströmen im Bereich oberhalb von 500 A, bevorzugt oberhalb von 1000 A und besonders bevorzugt oberhalb von 2000 A vorgesehen. Der Ladestecker, insbesondere der Hochleistungs-Ladestecker, ist insbesondere zu einer Übertragung von Spitzen-Ladeleistungen oberhalb von 100 kW, vorteilhaft oberhalb von 300 kW, bevorzugt oberhalb von 500 kW und besonders bevorzugt oberhalb von 1 MW vorgesehen. Insbesondere ist der Hochleistungs-Ladestecker als ein Megawatt-Ladestecker ausgebildet. Insbesondere kann der Ladestecker als ein aktiv gekühlter / fluidgekühlter Ladestecker ausgebildet sein. Eine Ausbildung als ungekühlter Ladestecker ist jedoch ebenfalls denkbar. Unter "vorgesehen" und/oder "eingerichtet" soll insbesondere speziell programmiert, ausgelegt und/oder ausgestattet verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.

Eine Temperatursensorbaugruppe ist vorzugsweise eine Kombination verschiedener Komponenten, die zusammenarbeiten, um eine Temperatur zu messen und diese Information in einer verwertbaren Form bereitzustellen. Die Temperatursensorbaugruppe bildet vorzugsweise ein Temperatursensor-Modul aus, welches insbesondere in einem Stück in den Ladestecker montierbar oder aus dem Ladestecker demontierbar ist. Das Temperatursensorelement kann ein Messwiderstand (z.B. ein PT1000-Messwiderstand oder ähnliches) sein. Alternativ ist auch eine Verwendung anderer Temperatursensor-Typen, wie z.B. Thermocouple, Thermistor, etc., denkbar. Die Temperatursensorbaugruppe kann zudem eine elektronische Schaltung aufweisen, welche vorzugsweise dazu vorgesehen ist, Rohdaten der Temperaturmesssignale zu verarbeiten und in ein zur weiteren Datenverarbeitung nutzbares Signal umzuwandeln. Dazu gehören beispielsweise eine Signalverstärkung, eine Rauschunterdrückung und/oder eine Kalibrierung. Das Wärmeaufnahmeelement ist vorzugsweise in direktem Berührungskontakt mit einem sich erwärmenden Bauteil des Ladesteckers, dessen Temperatur überwacht werden soll. Das Wärmeaufnahmeelement ist vorzugsweise in einem direkten Berührungskontakt mit einer Ladestrom-Hauptleitung des Ladesteckers, insbesondere dem Steckkontakt des Ladesteckers. Insbesondere ist das Wärmeaufnahmeelement dazu eingerichtet, zwischen zwei nacheinander von einem Ladestrom durchflossenen Teilen des Steckkontakts des Ladesteckers geschaltet / montiert zu werden. Insbesondere ist das Wärmeaufnahmeelement in dem montierten Zustand zwischen die zwei nacheinander von dem Ladestrom des Ladesteckers durchflossenen Teile des Steckkontakts des Ladesteckers montiert. Dabei berührt das Wärmeaufnahmeelement vorzugsweise die beiden Teile direkt. Der Steckkontakt ist vorzugsweise ein Gleichstrom-Steckkontakt (DC-Steckkontakt).

Ferner wird vorgeschlagen, dass das Wärmeaufnahmeelement monolithisch mit dem Wärmeleitelement ausgebildet ist. Dadurch kann vorteilhaft eine besonders gute Wärmeleitung und somit eine hohe Direktheit der Temperaturmessung erreicht werden. Zudem kann vorteilhaft eine einfache und insbesondere wenig komplexe Konstruktion erreicht werden. Das Wärmeaufnahmeelement und das Wärmeleitelement könnten beispielsweise beide jeweils Teile / Teilbereiche eines einteiligen Blechteils, insbesondere Stanzblechteils / Stanzbiegeblechteils, vorzugsweise Kupferblech-Stanzteils / Kupferblech-Stanzbiegeteils, sein.

Zudem wird vorgeschlagen, dass das Wärmeaufnahmeelement und das Wärmeleitelement aus einem Metall, insbesondere aus Kupfer, ausgebildet ist. Dadurch kann vorteilhaft eine gute Wärmeleitung und somit insbesondere eine hohe Genauigkeit und Schnelligkeit der Temperaturmessung erreicht werden. Zudem kann vorteilhaft eine hohe elektrische Leitfähigkeit erzielt werden, so dass insbesondere durch das Weiterleiten des Ladestroms durch das Wärmeaufnahmeelement keine wesentlichen negativen Auswirkungen auf die Funktionsfähigkeit und/oder die Leistungsfähigkeit des Ladesteckers erzeugt werden. Alternativ zu Kupfer sind auch andere Metalle mit hohen Wärme- und Stromleitungswerten (z.B. Silber, Gold, Aluminium oder Messing), denkbar. Bei der Verwendung von Kupfer könnte ein ETP1 (elektrolytisches Tough-Pitch)-Kupfer in Betracht gezogen werden.

Des Weiteren wird vorgeschlagen, dass das Temperatursensorelement und das Wärmeleitelement sowie das Temperatursensorelement und das Wärmeaufnahmeelement frei von einem Berührungskontakt zueinander sind. Dadurch kann vorteilhaft eine hohe Lebensdauer und/oder Zuverlässigkeit der Temperatursensorbaugruppe erreicht werden. Vorteilhaft kann das Temperatursensorelement vor hohen Spannungen geschützt werden.

Wenn das Wärmeleitelement das Temperatursensorelement zumindest zu zwei unterschiedlichen Seiten umgreift, kann vorteilhaft eine gute Wärmeübertragung von dem Wärmeleitelement auf das Temperatursensorelement, insbesondere auch ohne direkten Berührungskontakt zwischen dem Temperatursensorelement und dem Wärmeleitelement, erreicht werden. Vorzugsweise sind die zwei Seiten des Temperatursensorelements, welche von dem Wärmeleitelement umgriffen sind, zueinander zu etwa 90° angewinkelt. Vorzugsweise grenzen die zwei Seiten des Temperatursensorelements, welche von dem Wärmeleitelement umgriffen sind, aneinander an.

Außerdem wird vorgeschlagen, dass die Temperatursensorbaugruppe eine Gehäuseeinheit umfasst, welche zumindest einen Großteil des Wärmeleitelements und zumindest einen Großteil des Temperatursensorelements umschließt. Dadurch kann vorteilhaft eine einfache Konstruktion und/oder eine hohe Robustheit erreicht werden. Vorteilhaft kann eine Modulbauweise, welche eine gemeinsame Montage aller Teile der Temperatursensorbaugruppe in einem Montageschritt ermöglicht, erreicht werden.

Zusätzlich wird vorgeschlagen, dass das Temperatursensorelement und/oder das Wärmeleitelement in die Gehäuseeinheit eingegossen ist/sind. Dadurch kann vorteilhaft ein Schutz des Temperatursensorelements vor hohen Spannungen erreicht werden, insbesondere indem Durchschläge von dem Wärmeleitelement zu dem Temperatursensorelement durch die Gehäuseeinheit verhindert werden können, insbesondere ohne dabei eine zu starke Abschirmung der von dem Wärmeleitelement zugeleiteten Wärme zu erzeugen. Insbesondere ist ein Bereich zwischen dem Temperatursensorelement und dem Wärmeleitelement durch ein Material der Gehäuseeinheit ausgefüllt, vorzugsweise vollständig ausgefüllt. Die Gehäuseeinheit ist vorzugsweise monolithisch ausgebildet. Die Gehäuseeinheit ist insbesondere als ein monolithischer Vergussblock ausgebildet. Das Wärmeleitelement und/oder das Temperatursensorelement können jeweils Außengeometrien, wie z.B. Vertiefungen, Nuten, Pins etc. aufweisen, welche, z.B. durch eine Hinterschneidung oder dergleichen, einen Halt der durch Vergießen erzeugten Gehäuseeinheit an dem Wärmeleitelement / dem Temperatursensorelement unterstützen.

Wenn die Gehäuseeinheit aus einem elektrisch isolierenden und thermisch leitenden Material ausgebildet ist, kann vorteilhaft eine präzise Temperaturmessung, insbesondere durch eine gute Wärmeleitung, bei zugleich hohem Schutz vor elektrischen Durchschlägen erreicht werden. Das elektrisch isolierende und thermisch leitende Material der Gehäuseeinheit ist ein Kunststoff, vorzugsweise ein TC (Thermally Conductive)-Kunststoff, wie z.B. ein TC8-Kunststoff. Vorzugsweise besitzt das elektrisch isolierende und thermisch leitende Material, insbesondere der TC-Kunststoff, der, insbesondere vergossenen, Gehäuseeinheit eine Wärmeleitfähigkeit von mehr als 1 W/m·K, vorzugsweise von mehr als 5 W/m·K, bevorzugt von mehr als 10 W/m·K und besonders bevorzugt von mehr als 15 W/m·K. Beispielsweise könnte der TC-Kunststoff ein Kunststoff mit Graphen, mit CNTs oder mit keramischen Füllstoffen, wie z.B. Aluminiumoxid, Bornitrid und Siliziumnitrid, sein.

Weiterhin wird vorgeschlagen, dass die Gehäuseeinheit ein Steckverbinderelement zumindest für eine Ausgabe der Temperaturmesssignale des Temperatursensorelements ausbildet oder aufnimmt. Dadurch kann vorteilhaft eine einfache Montage und/oder Demontage erreicht werden. Das Steckverbinderelement ist vorzugsweise eine Buchse für einen Daten-Stecker, z.B. eine integral durch die Gehäuseeinheit ausgebildete Daten-Stecker-Buchse oder ein in eine Aufnahme der Gehäuseeinheit eingeschobenes Buchsengehäuse, wie z.B. ein Molex-Buchsengehäuse. Vorzugsweise ist die Verwendung eines Steckverbinderelements in der Gehäuseeinheit platzsparend und stellt eine lösbare Verbindung bereit, welche einen einfachen Austausch der Temperatursensorbaugruppe in einem Ladestecker ermöglicht.

Außerdem wird vorgeschlagen, dass das Wärmeaufnahmeelement und/oder das Wärmeleitelement plattenartig ausgebildet ist. Dadurch kann vorteilhaft eine einfache und/oder kompakte Ausgestaltung erreicht werden. Zudem kann vorteilhaft eine einfache Einpassung / Zwischenschaltung des Wärmeaufnahmeelements zwischen Ladestrom führende Bauteile des Ladesteckers / des Steckkontakts ermöglicht werden. Die Wendung "plattenartig" bezeichnet insbesondere eine Formgebung eines Objekts, die sich durch eine im Verhältnis zu einer Dicke große Länge und Breite auszeichnet. Vorzugsweise ist die Länge und die Breite des Wärmeaufnahmeelements und/oder des Wärmeleitelements wenigstens dreimal, vorzugsweise wenigstens fünfmal so groß wie die dazu senkrechte Dicke des Wärmeaufnahmeelements und/oder des Wärmeleitelements. Insbesondere sind das Wärmeaufnahmeelement und das Wärmeleitelement durch ein gemeinsames flaches Plättchen ausgebildet. Insbesondere ist ein das Wärmeleitelement ausbildender Teil des gemeinsamen flachen Plättchens zumindest zu einem Großteil von der Gehäuseeinheit umgossen, während ein das Wärmeaufnahmeelement ausbildender Teil des gemeinsamen flachen Plättchens zumindest zu einem Großteil, vorzugsweise vollständig, frei von einer Umgießung durch die Gehäuseeinheit ist. Insbesondere ist die Gehäuseeinheit lediglich in dem das Wärmeleitelement ausbildenden Teil des gemeinsamen flachen Plättchens angeordnet.

Des Weiteren wird vorgeschlagen, dass das Wärmeaufnahmeelement eine durchgehende innere Ausnehmung aufweist, welche dazu vorgesehen ist, ein Montageelement des elektrischen Steckkontakts des Ladesteckers aufzunehmen. Dadurch kann vorteilhaft eine einfache Montage ermöglicht werden. Zudem kann vorteilhaft eine gleichmäßige Wärmeaufnahme und/oder Stromweiterleitung durch das Wärmeaufnahmeelement erreicht werden. Insbesondere durchdringt die Ausnehmung das Wärmeaufnahmeelement in Dickenrichtung. Insbesondere ist die Ausnehmung zentral in dem Wärmeaufnahmeelement angeordnet.

Wenn das Wärmeaufnahmeelement eine Ringscheiben-Form mit der durchgehenden inneren Ausnehmung aufweist, kann vorteilhaft eine möglichst exakte Passung mit dem Steckerkontakt erreicht werden. Das Wärmeaufnahmeelement, insbesondere die Ringscheiben-Form, weist eine Dicke im Bereich zwischen 0,1 mm und 5 mm, vorzugsweise zwischen 0,3 mm und 2 mm und bevorzugt von etwa 0,5 mm auf. Die innere Ausnehmung weist einen Durchmesser auf, dessen Abmessung zwischen einem Fünftel und einer Hälfte eines Außendurchmessers (eines Außenumfangs) der Ringscheiben-Form, vorzugsweise zwischen einem Viertel und einem Drittel des Außendurchmessers der Ringscheiben-Form und bevorzugt bei etwa einem Drittel des Außendurchmessers der Ringscheiben-Form liegt.

In diesem Zusammenhang wird zudem vorgeschlagen, dass ein Außenumfang der Ringscheiben-Form etwa einem Außenumfang eines Querschnitts des elektrischen Steckkontakts des Ladesteckers entspricht. Dadurch kann vorteilhaft die Stromweiterleitung und/oder die Wärmeaufnahme durch das Wärmeaufnahmeelement optimiert werden. Außerdem kann eine kompakte Ausgestaltung erreicht werden. Insbesondere führt die Ringscheiben-Form den elektrischen Steckkontakt geometrisch nahezu unverändert weiter.

Zusätzlich wird vorgeschlagen, dass ein Innenumfang der durchgehenden inneren Ausnehmung des Wärmeaufnahmeelements etwa einem Außenumfang einer Montagestelle eines Pins, insbesondere eines Fingerschutz-Pins, des elektrischen Steckkontakts des Ladesteckers entspricht. Dadurch kann vorteilhaft eine einfache Montage ermöglicht werden, welche insbesondere keine eigenen weiteren Montageelemente benötigt. Insbesondere ist die innere Ausnehmung des Wärmeaufnahmeelements zu einer Aufnahme des Pins vorgesehen. Vorzugsweise wird der Pin, insbesondere Fingerschutz-Pin, vorzugsweise ein Gewindeabschnitt des Pins, zu der Montage zunächst durch die innere Ausnehmung des Wärmeaufnahmeelements gesteckt und dann in diesem Zustand in eine dafür vorgesehene Montagestelle des elektrischen Steckkontakts des Ladesteckers, z.B. einer Krimphülse des Ladesteckers oder einer Kühleinheit des Ladesteckers, montiert, insbesondere eingeschraubt. Dadurch wird das Wärmeaufnahmeelement vorzugsweise an eine Kontaktträgerplatte des Ladesteckers, welche zu einer Montage der elektrischen Steckkontakte des Ladesteckers vorgesehen ist, oder an einen Abschnitt des elektrischen Steckkontakts angepresst. Diese Ausgestaltung ermöglicht vorteilhaft einen einfachen Austausch der Temperatursensorbaugruppe eines Ladesteckers. Ein Steckergehäuse des Ladesteckers dichtet vorzugsweise auch die Temperatursensorbaugruppe wasserdicht nach außen hin ab. Die Temperatursensorbaugruppe ist nach der Montage des Ladesteckers in einem Inneren des Steckergehäuses des Ladesteckers angeordnet. Das Steckergehäuse, insbesondere ein Frontface des Steckergehäuses, hält vorzugsweise die Gehäuseeinheit der Temperatursensorbaugruppe in Position. Es ist denkbar, dass mehrere elektrische Steckkontakte des Ladesteckers jeweils mit einer eigenen Temperatursensorbaugruppe versehen sind.

Ferner wird ein Ladestecker, insbesondere ein Hochleistungs-Ladestecker zu einem Aufladen eines Elektrofahrzeugs, mit einem zu einem Einstecken in ein Ladestecker-Gegenstück, z.B. eine Ladebuchse, vorgesehenen und zumindest einen elektrischen Steckkontakt, vorzugsweise mehrere elektrische Steckkontakte, aufweisenden Steckergesicht und mit der Temperatursensorbaugruppe vorgeschlagen. Dadurch kann vorteilhaft eine besonders präzise Temperaturüberwachung, insbesondere mit einer besonders hohen Wiederholgenauigkeit, des Ladesteckers erreicht werden. Zudem kann vorteilhaft ein Ladestecker mit einem besonders einfach austauschbaren Temperatursensor erhalten werden.

Überdies wird vorgeschlagen, dass das Wärmeaufnahmeelement der Temperatursensorbaugruppe, insbesondere in Ladestrom-Flussrichtung, zwischen einem der elektrischen Steckkontakte des Ladesteckers und einer Montagestelle einer zu einer Übertragung von elektrischer Leistung vorgesehenen internen Leitungsanordnung des Ladesteckers derart eingeklemmt ist, dass zumindest ein Teil des über den Ladestecker ausgebbaren Ladestroms durch das Wärmeaufnahmeelement von der Leitungsanordnung an einen außenliegenden Teil des elektrischen Steckkontakts weitergeleitet wird. Dadurch kann vorteilhaft eine besonders präzise Temperaturüberwachung, insbesondere mit einer besonders hohen Wiederholgenauigkeit, des Ladesteckers erreicht werden. Zudem kann vorteilhaft eine einfache Montage und/oder eine kompakte Ausgestaltung erreicht werden.

Zudem wird vorgeschlagen, dass die Temperatursensorbaugruppe, insbesondere das Wärmeaufnahmeelement der Temperatursensorbaugruppe, mittels eines Pins des elektrischen Steckkontakts an die Leitungsanordnung befestigt ist, welcher vorzugsweise durch eine durchgehende innere Ausnehmung des Wärmeaufnahmeelements gesteckt und an der Leitungsanordnung, beispielsweise durch ein Einschrauben, befestigt ist. Dadurch kann vorteilhaft eine einfache Montage und/oder eine kompakte Ausgestaltung erreicht werden. Vorteilhaft sind keine separaten Montageelemente zur Montage der Temperatursensorbaugruppe erforderlich.

Des Weiteren wird vorgeschlagen, dass die Temperatursensorbaugruppe dem zumindest einen elektrischen Steckkontakt zugeordnet ist und dass das Steckergesicht zumindest einen weiteren elektrischen Steckkontakt aufweist, welchem eine, insbesondere zu der Temperatursensorbaugruppe identische oder von der Temperatursensorbaugruppe verschiedene, jedoch ebenfalls zumindest ein identisches Wärmeaufnahmeelement aufweisende, zweite Temperatursensorbaugruppe zugeordnet ist. Dadurch kann vorteilhaft eine besonders hohe Sicherheit des Ladesteckers, insbesondere durch eine besonders gute Temperaturüberwachung von Komponenten des Ladesteckers erreicht werden. Vorzugsweise ist die zweite Temperatursensorbaugruppe spiegelverkehrt zu der Temperatursensorbaugruppe in das Steckergehäuse des Ladesteckers eingebaut.

Die erfindungsgemäße Temperatursensorbaugruppe und der erfindungsgemäße Ladestecker sollen hierbei nicht auf die oben beschriebene Anwendung und Ausführungsform beschränkt sein. Insbesondere kann die erfindungsgemäße Temperatursensorbaugruppe und der erfindungsgemäße Ladestecker zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittdarstellung eines Ladesteckers mit einer montierten Temperatursensorbaugruppe,
- Fig. 2: eine schematische perspektivische und teiltransparente Teilansicht eines Steckergesichts des Ladesteckers mit der Temperatursensorbaugruppe und mit einer zweiten Temperatursensorbaugruppe,
- Fig. 3: eine schematische perspektivische Darstellung der Temperatursensorbaugruppe und
- Fig. 4: eine leicht abgewandelte Ausgestaltung des Ladesteckers mit der Temperatursensorbaugruppe.

### Beschreibung des Ausführungsbeispiels

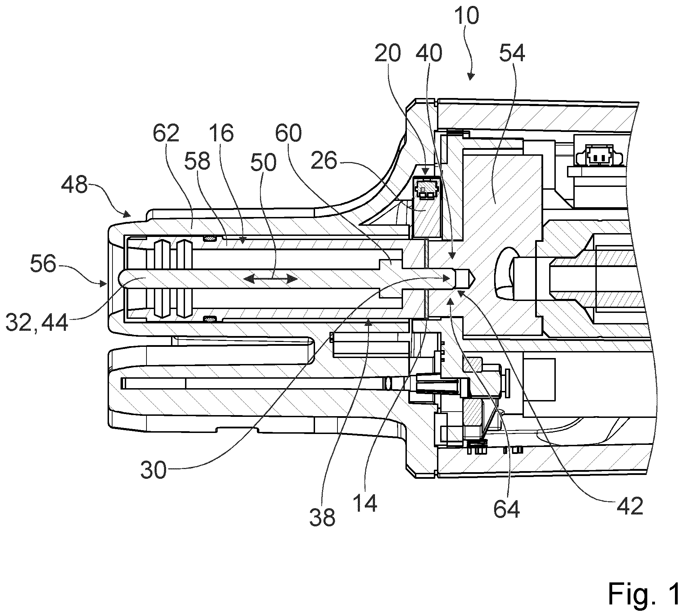

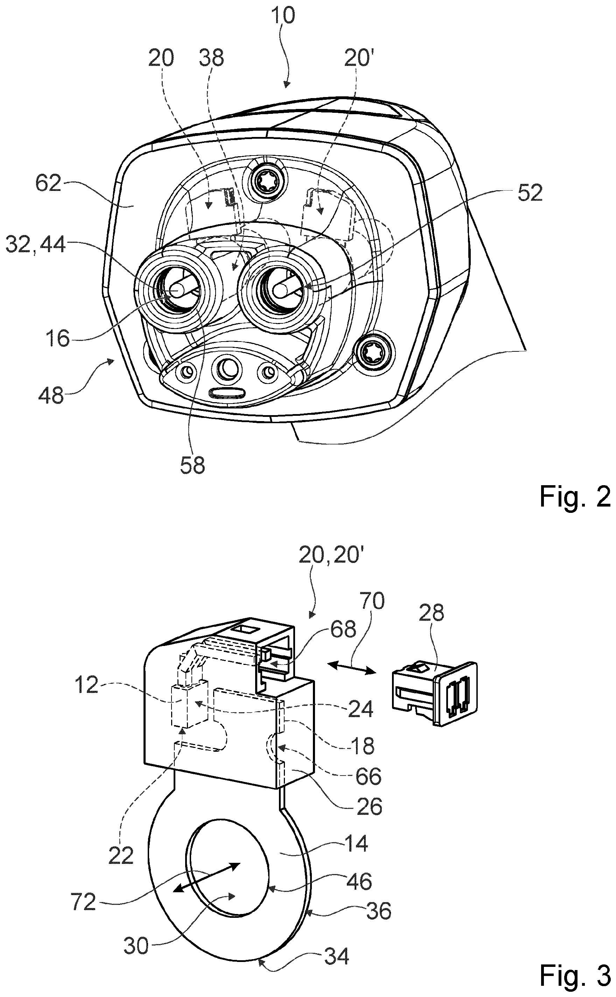

Die Figur 1 zeigt eine schematische Schnittdarstellung eines Ladesteckers 10. Der Ladestecker 10 ist als ein Hochleistungs-Ladestecker zu einem Aufladen eines Elektrofahrzeugs vorgesehen. Der Ladestecker 10 weist ein Steckergesicht 48 auf. Das Steckergesicht 48 ist zu einem Einstecken in ein Ladestecker-Gegenstück, z.B. eine Ladebuchse des Elektrofahrzeugs, vorgesehen. Das Steckergesicht 48 umfasst elektrische Steckkontakte 16, 52 (vgl. auch Fig. 2). Die elektrischen Steckkontakte 16, 52 sind männliche Steckkontakte. Jeder der elektrischen Steckkontakte 16, 52 weist eine zylindrische Kontakthülse 58 auf. Die zylindrische Kontakthülse 58 ist elektrisch leitfähig. Die zylindrische Kontakthülse 58 ist zu einer Leitung eines über den Ladestecker 10 ausgebbaren Ladestroms vorgesehen. Jeder der elektrischen Steckkontakte 16, 52 weist einen Pin 44 auf. Der Pin 44 ist ein Fingerschutz-Pin. Der Pin 44 kann beispielsweise aus Kupfer mit einer Kunststoffkappe ausgebildet sein. Vorzugsweise ist der Pin 44 nicht an der Übertragung des Ladestroms beteiligt. Vorteilhaft kann dadurch eine Lichtbogenbildung verhindert werden. Der Pin 44 ist in einem montierten Zustand in einem Inneren der zylindrischen Kontakthülse 58 angeordnet. Die zylindrische Kontakthülse 58 und der Pin 44 können elektrisch miteinander kontaktiert sein.

Der Ladestecker 10 weist eine interne Leitungsanordnung 54 auf. Die interne Leitungsanordnung 54 des Ladesteckers 10 ist zu einer Übertragung von elektrischer Leistung an die elektrischen Steckkontakte 16, 52 vorgesehen. Die interne Leitungsanordnung 54 des Ladesteckers 10 ist zu einer Herstellung einer elektrisch leitenden Verbindung zwischen den elektrischen Steckkontakten 16, 52 und einem Ladekabel (nicht dargestellt) vorgesehen. Die interne Leitungsanordnung 54 ist im beispielhaft dargestellten Fall der Fig. 1 auch zu einer Leitung eines den Ladestecker 10 kühlenden Kühlfluids vorgesehen. Die interne Leitungsanordnung 54 weist eine Montagestelle 42 für den elektrischen Steckkontakt 16 auf. Die Montagestelle 42 umfasst ein Gewindeloch. Der Pin 44 weist in einem innenliegenden Teil (Endbereich) ein Außengewinde auf, welches in das Gewindeloch der Montagestelle 42 einschraubbar ist. Der Pin 44 weist einen Kragen 60 auf. Der Kragen 60 ist zu einem Anliegen an einem Teil der zylindrischen Kontakthülse 58 vorgesehen. Der Kragen 60 ist dazu vorgesehen, die zylindrische Kontakthülse 58 bei einem Einschrauben des Pins 44 in das Gewindeloch der Montagestelle 42 in Richtung der internen Leitungsanordnung 54 zu drücken. Alternative Verbindungsmethoden zwischen Pin 44 und Montagestelle 42, beispielsweise eine Presspassung, ein Einkleben, ein Einlöten oder ein Einschweißen, sind ebenfalls denkbar. Der Ladestecker 10 weist ein Steckergehäuse 62 auf. Die interne Leitungsanordnung 54 ist in einem Inneren des Steckergehäuses 62 angeordnet. Das Steckergehäuse 62 dichtet das Innere zur Umgebung hin ab. Das Steckergehäuse 62 hält die interne Leitungsanordnung 54 in Position.

Der Ladestecker 10 weist eine Temperatursensorbaugruppe 20 auf (vgl. auch Fig. 3). Die Temperatursensorbaugruppe 20 ist zu einer Erfassung (und Verarbeitung) und Ausgabe eines Temperaturmesssignals vorgesehen. Die Temperatursensorbaugruppe 20 ist zu einer Erfassung einer Temperatur des elektrischen Steckkontakts 16 und/oder der internen Leitungsanordnung 54 zumindest im Bereich der Montagestelle 42 vorgesehen. Die Temperatursensorbaugruppe 20 ist in dem Inneren des Steckergehäuses 62 angeordnet. Das Steckergehäuse 62 hält die Temperatursensorbaugruppe 20 in Position und schirmt die Temperatursensorbaugruppe 20 nach außen zumindest wasserdicht ab. Die Temperatursensorbaugruppe 20 umfasst ein Wärmeaufnahmeelement 14 Das Wärmeaufnahmeelement 14 ist dazu eingerichtet, Wärme des elektrischen Steckkontakts 16 des Ladesteckers 10 und/oder der Montagestelle 42 aufzunehmen. Das Wärmeaufnahmeelement 14 ist dazu eingerichtet, in einem in den Ladestecker 10 montierten Zustand der Temperatursensorbaugruppe 20 zumindest einen Teil des über den Ladestecker 10 ausgebbaren Ladestroms zu leiten. Das Wärmeaufnahmeelement 14 ist dazu eingerichtet, in dem in den Ladestecker 10 montierten Zustand der Temperatursensorbaugruppe 20 zumindest einen Teil des über den Ladestecker 10 ausgebbaren Ladestroms von der internen Leitungsanordnung 54 an den elektrischen Steckkontakt 16, insbesondere an die zylindrische Kontakthülse 58 und/oder an den Pin 44, weiterzuleiten. Das Wärmeaufnahmeelement 14 der Temperatursensorbaugruppe 20 ist in Ladestrom-Flussrichtung 50 zwischen dem elektrischen Steckkontakt 16 des Ladesteckers 10 und der Montagestelle 42 der zur Übertragung von elektrischer Leistung vorgesehenen internen Leitungsanordnung 54 des Ladesteckers 10 derart eingeklemmt, dass zumindest ein Teil des über den Ladestecker 10 ausgebbaren Ladestroms durch das Wärmeaufnahmeelement 14 von der internen Leitungsanordnung 54 an einen außenliegenden Teil 56 des elektrischen Steckkontakts 16 weitergeleitet wird. Die Temperatursensorbaugruppe 20 ist dazu mittels des Pins 44 des elektrischen Steckkontakts 16 an die interne Leitungsanordnung 54 befestigt. Der Pin 44 ist dazu durch eine durchgehende innere Ausnehmung 30 des Wärmeaufnahmeelements 14 gesteckt und an der Montagestelle 42 der internen Leitungsanordnung 54 durch ein Einschrauben befestigt. Der Pin 44 bildet ein Montageelement 32 zur Montage des elektrischen Steckkontakts 16, insbesondere der zylindrischen Kontakthülse 58 an der internen Leitungsanordnung 54 aus. Der Kragen 60 des Pins 44 drückt die zylindrische Kontakthülse 58 auf das Wärmeaufnahmeelement 14, welches dadurch wiederum auf die interne Leitungsanordnung 54 gedrückt wird. Durch das Andrücken entsteht ein guter elektrischer und thermischer Leitungspfad zwischen der internen Leitungsanordnung 54 und dem elektrischen Steckkontakt 16, welcher das Wärmeaufnahmeelement 14 passiert.

Die Figur 2 zeigt eine schematische perspektivische Teilansicht des Steckergesichts 48 des Ladesteckers 10. Das Steckergesicht 48 umfasst einen weiteren elektrischen Steckkontakt 52. Der weitere elektrische Steckkontakt 52 ist im Wesentlichen identisch zu dem elektrischen Steckkontakt 16 ausgebildet. Der Ladestecker 10 umfasst eine zweite Temperatursensorbaugruppe 20'. Die zweite Temperatursensorbaugruppe 20' ist im Wesentlichen identisch zu der Temperatursensorbaugruppe 20 ausgebildet. Die Temperatursensorbaugruppe 20 ist dem elektrischen Steckkontakt 16 zugeordnet. Die Temperatursensorbaugruppe 20 misst eine Temperatur des elektrischen Steckkontakts 16. Die zweite Temperatursensorbaugruppe 20' ist dem weiteren elektrischen Steckkontakt 52 zugeordnet. Die zweite Temperatursensorbaugruppe 20' misst eine Temperatur des weiteren elektrischen Steckkontakts 52.

Die Figur 3 zeigt eine schematische perspektivische Darstellung der Temperatursensorbaugruppe 20. Die Temperatursensorbaugruppe 20 umfasst ein Temperatursensorelement 12. Das Temperatursensorelement 12 ist zu einer Erfassung der Temperaturmesssignale vorgesehen. Das Temperatursensorelement 12 kann zudem eine Elektronik umfassen, welche zu einer Vorverarbeitung und/oder zu einem Ausgeben der Temperaturmesssignale nach extern vorgesehen ist. Die Temperatursensorbaugruppe 20 umfasst ein Wärmeleitelement 18. Das Wärmeleitelement 18 ist dazu eingerichtet, die von dem Wärmeaufnahmeelement 14 aufgenommene Wärme zu dem Temperatursensorelement 12 hin zu leiten.

Das Wärmeaufnahmeelement 14 ist aus einem Metall ausgebildet. Das Wärmeaufnahmeelement 14 ist aus Kupfer ausgebildet. Das Wärmeleitelement 18 ist aus einem Metall ausgebildet. Das Wärmeleitelement 18 ist aus Kupfer, ausgebildet. Das Wärmeaufnahmeelement 14 ist plattenartig ausgebildet. Das Wärmeleitelement 18 ist plattenartig ausgebildet. Das Wärmeaufnahmeelement 14 ist monolithisch mit dem Wärmeleitelement 18 ausgebildet. Das Wärmeaufnahmeelement 14 weist die durchgehende innere Ausnehmung 30 auf. Die durchgehende innere Ausnehmung 30 ist dazu vorgesehen, das Montageelement 32 des elektrischen Steckkontakts 16 des Ladesteckers 10, insbesondere den Pin 44 aufzunehmen. Das Wärmeaufnahmeelement 14 bildet eine Ringscheiben-Form 34 aus. Die Ringscheiben-Form 34 weist die durchgehende innere Ausnehmung 30 auf.

Die Ringscheiben-Form 34 weist einen Außenumfang 36 auf. Ein Querschnitt des elektrische Steckkontakts 16 weist einen Außenumfang 38 auf (vgl. Fig. 1). Der Außenumfang 36 der Ringscheiben-Form 34 des Wärmeaufnahmeelements 14 entspricht etwa dem Außenumfang 38 des Querschnitts des elektrischen Steckkontakts 16 des Ladesteckers 10. Die durchgehende innere Ausnehmung 30 des Wärmeaufnahmeelements 14 weist einen Innenumfang 46 auf. Der Pin 44 weist eine Montagestelle 64 auf. Die Montagestelle 64 des Pins 44 ist durch das Außengewinde des Pins 44 ausgebildet. Die Montagestelle 64 des Pins 44 weist einen Außenumfang 40 auf (vgl. Fig. 1). Der Innenumfang 46 der durchgehenden inneren Ausnehmung 30 des Wärmeaufnahmeelements 14 entspricht etwa dem Außenumfang 40 der Montagestelle 64 des Pins 44 des elektrischen Steckkontakts 16 des Ladesteckers 10.

Das Temperatursensorelement 12 und das Wärmeleitelement 18 sind frei von gegenseitigen Berührungskontakten. Das Temperatursensorelement 12 und das Wärmeaufnahmeelement 14 sind frei von gegenseitigen Berührungskontakten zueinander. Das Wärmeleitelement 18 umgreift das Temperatursensorelement 12 zumindest zu zwei unterschiedlichen Seiten 22, 24. Die Temperatursensorbaugruppe 20 weist eine Gehäuseeinheit 26 auf. Die Gehäuseeinheit 26 umschließt einen Großteil des Wärmeleitelements 18. Das Wärmeleitelement 18 ist in die Gehäuseeinheit 26 eingegossen. Die Gehäuseeinheit 26 umschließt das gesamte Temperatursensorelement 12. Das Temperatursensorelement 12 ist in die Gehäuseeinheit 26 eingegossen. Die Gehäuseeinheit 26 füllt einen Zwischenraum zwischen dem Temperatursensorelement 12 und dem Wärmeleitelement 18 aus. Die Gehäuseeinheit 26 ist aus einem elektrisch isolierenden und thermisch leitenden Material ausgebildet. Das Wärmeleitelement 18 weist Befestigungsausnehmungen 66 auf. Die Befestigungsausnehmungen 66 sind als halbkreisförmige Ausschnitte in dem Wärmeleitelement 18 ausgebildet. Die Gehäuseeinheit 26 ist derart ausgebildet / derart vergossen, dass sie die Befestigungsausnehmungen 66 ausfüllt und dadurch einen Halt der Gehäuseeinheit 26 an dem Wärmeleitelement 18 verstärkt.

Die Gehäuseeinheit 26 nimmt ein Steckverbinderelement 28 für eine Ausgabe der Temperaturmesssignale des Temperatursensorelements 12 auf. Die Gehäuseeinheit 26 bildet eine Aufnahmeausnehmung 68 aus, welche zu einer Aufnahme des externen Steckverbinderelements 28 vorgesehen ist. Das externe Steckverbinderelement 28 ist vorgefertigt und wird bei einer Montage der Temperatursensorbaugruppe 20 in die Gehäuseeinheit 26 fixiert, z.B. durch ein Einkleben oder durch ein Einpressen. Dadurch kann vorteilhaft jeweils ein passendes Steckverbinderelement 28 für verschiedene Ausführungen von Ladesteckern 10 in die Temperatursensorbaugruppe 20 montiert werden. Alternativ könnte die Aufnahmeausnehmung 68 auch direkt das Steckverbinderelement 28 für die Ausgabe der Temperaturmesssignale des Temperatursensorelements 12 ausbilden. Eine Einsteckrichtung 70, aus welcher ein externer Datenstecker in das Steckverbinderelement 28 eingesteckt werden kann, ist parallel zu einer Flächenebene des Wärmeaufnahmeelements 14 und/oder des Wärmeleitelements 18 ausgerichtet. Die Einsteckrichtung 70, aus welcher der externe Datenstecker in das Steckverbinderelement 28 eingesteckt werden kann, ist senkrecht zu einer Einführrichtung 72, aus welcher der Pin 44 in die innere Ausnehmung 30 zur Montage an die interne Leitungsanordnung 54 des Ladesteckers 10 eingeführt wird, ausgerichtet.

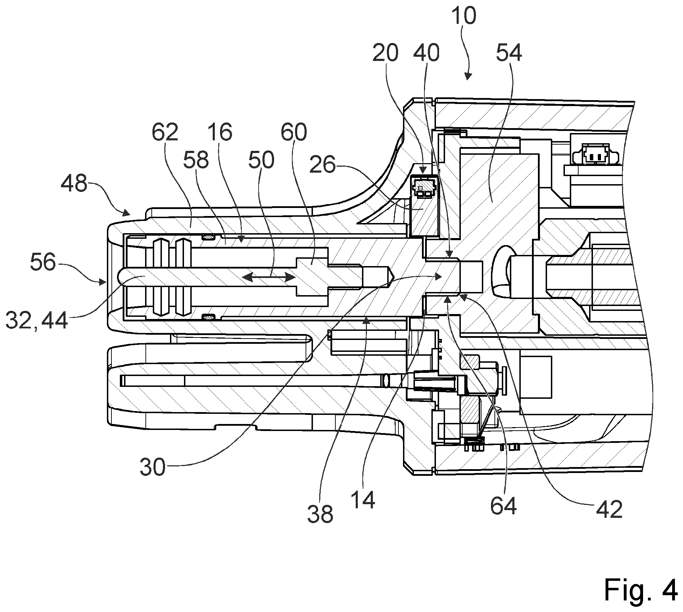

Die Figur 4 zeigt dieselbe Ansicht wie die Figur 1 einer leicht abgewandelten Ausgestaltung des Ladesteckers 10, insbesondere des elektrischen Steckkontakts 16 des Ladesteckers 10, mit der Temperatursensorbaugruppe 20. Die zylindrische Kontakthülse 58 ist in diesem Fall in einem inneren Ende geschlossen und weist einen Fortsatz 74 auf, über welchen die Kontakthülse 58 direkt in die Montagestelle 42 der Leitungsanordnung 54 montiert ist. Die das Wärmeaufnahmeelement 14 einklemmende Kraft wird in diesem Fall durch das Montieren, z.B. Einschrauben, des Fortsatzes 74 der Kontakthülse 58 in die Montagestelle 42 erzeugt. Der Pin 44 ist daran unbeteiligt. Der Pin 44 ist lediglich in eine dafür vorgesehene, insbesondere dem Fortsatz 74 axial gegenüberliegend angeordnete, Montagestelle 76 der Kontakthülse 58 montiert, insbesondere eingeschraubt.

### Bezugszeichen

- 10: Ladestecker
- 12: Temperatursensorelement
- 14: Wärmeaufnahmeelement
- 16: Elektrischer Steckkontakt
- 18: Wärmeleitelement
- 20: Temperatursensorbaugruppe
- 22: Seite
- 24: Seite
- 26: Gehäuseeinheit
- 28: Steckverbinderelement
- 30: Ausnehmung
- 32: Montageelement
- 34: Ringscheiben-Form
- 36: Außenumfang
- 38: Außenumfang
- 40: Außenumfang
- 42: Montagestelle
- 44: Pin
- 46: Innenumfang
- 48: Steckergesicht
- 50: Ladestrom-Flussrichtung
- 52: Elektrischer Steckkontakt
- 54: Interne Leitungsanordnung
- 56: Außenliegender Teil
- 58: Kontakthülse
- 60: Kragen
- 62: Steckergehäuse
- 64: Montagestelle
- 66: Befestigungsausnehmung
- 68: Aufnahmeausnehmung
- 70: Einsteckrichtung
- 72: Einführrichtung
- 74: Fortsatz
- 76: Montagestelle

## Patentansprüche

1. Temperatursensorbaugruppe (20) für einen Ladestecker (10), insbesondere einen Hochleistungs-Ladestecker zu einem Aufladen eines Elektrofahrzeugs, zumindest umfassend
ein Temperatursensorelement (12) zu einer Erfassung von Temperaturmesssignalen,
ein Wärmeaufnahmeelement (14), welches dazu eingerichtet ist, Wärme eines elektrischen Steckkontakts (16) des Ladesteckers (10) aufzunehmen, und
ein Wärmeleitelement (18), welches dazu eingerichtet ist, die von dem Wärmeaufnahmeelement (14) aufgenommene Wärme zu dem Temperatursensorelement (12) zu leiten,
**dadurch gekennzeichnet, dass** zumindest das Wärmeaufnahmeelement (14) dazu eingerichtet ist, zumindest in einem in den Ladestecker (10) montierten Zustand der Temperatursensorbaugruppe (20) zumindest einen Teil eines über den Ladestecker (10) ausgebbaren Ladestroms weiterzuleiten.

2. Temperatursensorbaugruppe (20) nach Anspruch 1, **dadurch gekennzeichnet, dass** das Wärmeaufnahmeelement dazu eingerichtet ist, zwischen zwei nacheinander von einem Ladestrom durchflossene Teile des Steckkontakts des Ladesteckers geschaltet und/oder montiert zu werden.

3. Temperatursensorbaugruppe (20) nach Anspruch 1 oder 2, **dadurch gekennzeichnet, dass** das Wärmeaufnahmeelement (14) monolithisch mit dem Wärmeleitelement (18) ausgebildet ist und/oder dass das Wärmeaufnahmeelement (14) und das Wärmeleitelement (18) aus einem Metall, insbesondere aus Kupfer, ausgebildet ist.

4. Temperatursensorbaugruppe (20) nach einem der vorhergehenden Ansprüche, **dadurch gekennzeichnet, dass** das Temperatursensorelement (12) und das Wärmeleitelement (18) sowie das Temperatursensorelement (12) und das Wärmeaufnahmeelement (14) frei von einem Berührungskontakt zueinander sind.

5. Temperatursensorbaugruppe (20) nach einem der vorhergehenden Ansprüche, **dadurch gekennzeichnet, dass** das Wärmeleitelement (18) das Temperatursensorelement (12) zumindest zu zwei unterschiedlichen Seiten (22, 24) umgreift.

6. Temperatursensorbaugruppe (20) nach einem der vorhergehenden Ansprüche, **gekennzeichnet durch** eine Gehäuseeinheit (26), welche zumindest einen Großteil des Wärmeleitelements (18) und zumindest einen Großteil des Temperatursensorelements (12) umschließt.

7. Temperatursensorbaugruppe (20) nach Anspruch 6, **dadurch gekennzeichnet, dass** das Temperatursensorelement (12) und/oder das Wärmeleitelement (18) in die Gehäuseeinheit (26) eingegossen ist/sind.

8. Temperatursensorbaugruppe (20) nach Anspruch 6 oder 7, **dadurch gekennzeichnet, dass** die Gehäuseeinheit (26) aus einem elektrisch isolierenden und thermisch leitenden Material ausgebildet ist.

9. Temperatursensorbaugruppe (20) nach einem der Ansprüche 6 bis 8, **dadurch gekennzeichnet, dass** die Gehäuseeinheit (26) ein Steckverbinderelement (28) zumindest für eine Ausgabe der Temperaturmesssignale des Temperatursensorelements (12) ausbildet oder aufnimmt.

10. Temperatursensorbaugruppe (20) nach einem der vorhergehenden Ansprüche, **dadurch gekennzeichnet, dass** das Wärmeaufnahmeelement (14) und/oder das Wärmeleitelement (18) plattenartig ausgebildet ist.

11. Temperatursensorbaugruppe (20) nach einem der vorhergehenden Ansprüche, **dadurch gekennzeichnet, dass** das Wärmeaufnahmeelement (14) eine durchgehende innere Ausnehmung (30) aufweist, welche dazu vorgesehen ist, ein Montageelement (32) des elektrischen Steckkontakts (16) des Ladesteckers (10) aufzunehmen.

12. Temperatursensorbaugruppe (20) nach einem der vorhergehenden Ansprüche, **dadurch gekennzeichnet, dass** das Wärmeaufnahmeelement (14) eine Ringscheiben-Form (34) mit einer durchgehenden inneren Ausnehmung (30) aufweist.

13. Ladestecker (10), insbesondere Hochleistungs-Ladestecker zu einem Aufladen eines Elektrofahrzeugs, mit einem zu einem Einstecken in ein Ladestecker-Gegenstück, z.B. eine Ladebuchse, vorgesehenen und zumindest einen elektrischen Steckkontakt (16) aufweisenden Steckergesicht (48) und mit einer Temperatursensorbaugruppe (20) nach einem der vorhergehenden Ansprüche.

14. Ladestecker (10) nach Anspruch 13, **dadurch gekennzeichnet, dass** das Wärmeaufnahmeelement (14) der Temperatursensorbaugruppe (20), insbesondere in Ladestrom-Flussrichtung (50), zwischen einem der elektrischen Steckkontakte (16, 52) des Ladesteckers (10) und einer Montagestelle (42) einer zu einer Übertragung von elektrischer Leistung vorgesehenen internen Leitungsanordnung (54) des Ladesteckers (10) derart eingeklemmt ist, dass zumindest ein Teil des über den Ladestecker (10) ausgebbaren Ladestroms durch das Wärmeaufnahmeelement (14) von der internen Leitungsanordnung (54) an einen außenliegenden Teil (56) des jeweiligen elektrischen Steckkontakts (16, 52) weitergeleitet wird.

15. Ladestecker (10) nach Anspruch 14, **dadurch gekennzeichnet, dass** die Temperatursensorbaugruppe (20) mittels eines Pins (44), insbesondere eines Fingerschutz-Pins, des elektrischen Steckkontakts (16) an die interne Leitungsanordnung (54) befestigt ist, welcher vorzugsweise durch eine durchgehende innere Ausnehmung (30) des Wärmeaufnahmeelements (14) gesteckt und an der internen Leitungsanordnung (54), beispielsweise durch ein Einschrauben, befestigt ist.

16. Ladestecker (10) nach einem der Ansprüche 13 bis 15, **dadurch gekennzeichnet, dass** das Wärmeaufnahmeelement (14) eine Ringscheiben-Form (34) mit einer durchgehenden inneren Ausnehmung (30) aufweist, wobei ein Außenumfang (36) der Ringscheiben-Form (34) etwa einem Außenumfang (38) eines Querschnitts des elektrischen Steckkontakts (16) des Ladesteckers (10) entspricht.

17. Ladestecker (10) nach einem der Ansprüche 13 bis 16, **dadurch gekennzeichnet, dass** das Wärmeaufnahmeelement (14) eine durchgehende innere Ausnehmung (30) aufweist, welche dazu vorgesehen ist, ein Montageelement (32) des elektrischen Steckkontakts (16) des Ladesteckers (10) aufzunehmen, wobei ein Innenumfang (46) der durchgehenden inneren Ausnehmung (30) des Wärmeaufnahmeelements (14) etwa einem Außenumfang (40) einer Montagestelle (64) eines Fingerschutz-Pins des elektrischen Steckkontakts (16) des Ladesteckers (10) entspricht.

18. Ladestecker (10) nach einem der Ansprüche 13 bis 17, **dadurch gekennzeichnet, dass** die Temperatursensorbaugruppe (20) dem zumindest einen elektrischen Steckkontakt (16) zugeordnet ist und dass das Steckergesicht (48) zumindest einen weiteren elektrischen Steckkontakt (52) aufweist, welchem eine zweite Temperatursensorbaugruppe (20') nach einem der Ansprüche 1 bis 12 zugeordnet ist.
